(19) Europäisches Patentamt
European Patent Office
Office européen des brevets

(11) **EP 4 462 181 A1**

(12) **EUROPEAN PATENT APPLICATION**

(43) Date of publication:
**13.11.2024 Bulletin 2024/46**

(51) International Patent Classification (IPC):
***G02F 1/33*** *(2006.01)*

(21) Application number: **23173025.0**

(52) Cooperative Patent Classification (CPC):
**G02F 1/33**

(22) Date of filing: **12.05.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Imec VZW**
**3001 Leuven (BE)**

(72) Inventor: **PEYSKENS, . Frédéric Olivier**
**1040 Brussel (BE)**

(74) Representative: **AWA Sweden AB**
**Box 5117**
**200 71 Malmö (SE)**

(54) **AN INTEGRATED DEVICE AND A METHOD FOR DIFFRACTING A LIGHT SIGNAL, AND A METHOD FOR MANUFACTURING AN INTEGRATED DEVICE**

(57) An integrated device (100; 200; 300) for diffracting a light signal comprises: an acousto-optic medium layer (120; 220; 320); a planar waveguide (130; 230; 330) for guiding the light signal and outputting the light signal into the acousto-optic medium layer (120; 220; 320); and an acoustic wave generator (110; 210a-h; 310) for generating and outputting an acoustic wave into the acousto-optic medium layer (120; 220; 320); wherein the acousto-optic medium layer (120; 220; 320) propagates the light signal defining a planar or curved light wavefront in the acousto-optic medium layer (120; 220; 320) and propagates the acoustic wave; wherein the acousto-optic medium layer (120; 220; 320) undergoes a variation in refractive index in dependence of the propagation of the acoustic wave, whereby the acousto-optic medium layer (120; 220; 320) causes diffraction of the light signal to form a diffracted light signal with a changed direction of propagation.

Fig. 1

## Description

Technical field

The present description relates to an integrated device for diffracting a light signal. The present description also relates to a method for diffracting a light signal in an integrated device and to a method for manufacturing an integrated device for diffracting a light signal.

Background

Photonic integrated circuits (PICs) are a promising route to integrate many optical functionalities on a single chip. This provides scalability and cost reduction. In addition, the optical functionalities may even be improved on bulk optics counterparts.

PICs have traditionally been developed using silicon. The use of silicon enables manufacturing of PICs using technologies that are used also for complementary metal-oxide-semiconductor (CMOS) manufacturing, such that high quality and repeatable manufacturing processes for CMOS technology may be utilized also in miniaturization of PICs.

However, silicon is not transparent to visible light. Therefore, in applications which involve use of visible light, such as in biosensing using fluorescence and/or Raman spectroscopy, there is an increasing interest in using silicon nitride (SiN) for manufacturing of PICs. SiN is also compatible with CMOS processing such that SiN PICs may also make use of high quality and repeatable manufacturing processes for CMOS technology.

However, it is very difficult to modulate the phase of a light signal in a fast and efficient way when the light signal is propagating in SiN waveguides. Phase shifting may be used in beam steering and in amplitude modulators, wherein a phase modulator may modify conditions for constructive and destructive interference of light.

Thus, there is a need for an improved speed and efficiency in controlling the light signal, in particular for use with SiN PICs.

Summary

An objective of the present description is to enable high speed and efficiency in controlling a light signal in an integrated device.

This and other objectives are at least partly met by the invention as defined in the independent claims. Preferred embodiments are set out in the dependent claims.

According to a first aspect, there is provided an integrated device for diffracting a light signal, said device comprising: an acousto-optic medium layer; a planar waveguide configured to guide the light signal along the waveguide and configured to output the light signal from the waveguide into the acousto-optic medium layer; and an acoustic wave generator configured to generate an acoustic wave and output the acoustic wave into the acousto-optic medium layer; wherein the acousto-optic medium layer is configured to propagate the light signal defining a planar or curved light wavefront in the acousto-optic medium layer and configured to propagate the acoustic wave in the acousto-optic medium layer; wherein the acousto-optic medium layer is configured to undergo a variation in refractive index in dependence of the propagation of the acoustic wave in the acousto-optic medium layer; whereby the acousto-optic medium layer causes diffraction of the light signal to form a diffracted light signal, wherein a direction of propagation of the light signal is changed based on the variation in the refractive index.

The acousto-optic medium layer undergoes a variation in refractive index in dependence of the propagation of the acoustic wave in the acousto-optic medium layer, which variation in refractive index causes diffraction of the incoming light signal propagating in the acousto-optic medium layer. The diffraction changes direction of propagation of the light signal within the acousto-optic medium layer to form the outgoing diffracted light signal in the acousto-optic medium layer.

In the integrated device of the first aspect, the incoming light signal is output from the waveguide into the acousto-optic medium layer. The incoming light signal defines a planar or curved light wavefront in the acousto-optic medium layer that may be modeled as free-space propagation of light in the acousto-optic medium layer. The variation in refractive index generated by propagation of the acoustic wave in the acousto-optic medium layer may correspond to an effect of a grating such that the incoming light signal may be seen as being incident on a grating formed by the acoustic wave in the acousto-optic medium. The free-space propagating incoming light signal may be predominantly diffracted in a single diffraction order at a particular angle, a Bragg angle, in relation to the grating defined by the acoustic wave.

The waveguide may be configured to output a focused incoming light signal providing a curved light wavefront. This may be beneficial to improve diffraction efficiency at low power of the acoustic wave. However, it should be realized that the incoming light signal need not be focused and that a planar light wavefront may be used instead.

Hence, thanks to the free-space propagating incoming light signal (planar or curved light wavefront) being diffracted by an effect of the acoustic wave in the acousto-optic medium layer, the integrated device is able to provide an outgoing diffracted light signal that is spatially separated from non-diffracted light. Also, the integrated device may provide an outgoing light signal as a single diffraction order such that no light is output in higher diffraction orders. Thus, the integrated device is able to spatially separate the outgoing diffracted light signal from non-diffracted light (traveling in a very different direction) and also no outgoing light is output in other diffraction orders. This implies that the integrated device is able to output outgoing light in a single direction, corresponding to the direction of diffracted light signal and no stray light or insignificant amounts of stray light in other directions is provided.

The integrated device is further able to easily switch on and off output of the diffracted light signal. When the acoustic wave generator is switched off, there is no longer a variation in the refractive index in the acousto-optic medium layer. This implies that no diffraction of light incident on the acousto-optic medium is provided and that no diffracted light signal is output. Hence, the acoustic wave generator may be completely switched off when no light is to be output. This implies that power consumption of the integrated device in an off state may be very low as no acoustic wave needs to be generated.

In addition, the integrated device may provide a very high extinction ratio, such as 50 dB, since there is no diffracted light being output when the acoustic wave is not present in the acousto-optic medium layer.

The integrated device may be configured to control the diffracted light signal being output. This may be realized by controlling the acoustic wave provided by the acoustic wave generator for changing the refractive index thereby diffracting the incoming light to an outgoing diffracted light signal. For instance, the acoustic wave may be controlled for providing amplitude modulation of the diffracted light signal while keeping a direction of the diffracted light signal fixed. Alternatively, the acoustic wave may be controlled for providing beam steering of the diffracted light signal, i.e., changing a direction of the diffracted light signal. As yet another alternative, a combination of amplitude modulation and beam steering may be provided.

The diffracted light signal may be output by the integrated device. Thus, the integrated device may be configured to emit the diffracted light signal, e.g., into free space external to the integrated device. However, the diffracted light signal may alternatively be coupled back into a receiver waveguide which receives the diffracted light signal and guides the diffracted light signal. If the diffraction of light is used for beam steering, the beam steering may be used for selecting a receiver waveguide among a plurality of receiver waveguides for receiving the diffracted light signal.

It should also be realized that the control of the diffracted light signal may be provided merely through control of the acoustic wave whereby no control of the light signal in the waveguide is needed. For instance, there is no need of tuning the wavelength of the light signal for controlling the diffracted light signal. However, it should be realized that tuning of the incoming light signal may be anyway desired for other purposes, and control of the light signal may be provided even if it is not necessary for modulating an amplitude or controlling beam steering of the diffracted light signal.

The integrated device may be particularly useful for diffracting a light signal that is provided in a waveguide formed by SiN. However, it should be realized that the integrated device is by no means limited for use with SiN waveguides and may alternatively be used with waveguides formed in any other material.

Use of SiN waveguides may ensure that the integrated device may be used with wavelengths of light spanning for instance from visible light to infrared light. The acousto-optic medium of the acousto-optic medium layer should also be transparent to the wavelength of light such that no or minimum loss of light due to absorption in the acousto-optic medium layer occurs.

Without being bound to a particular theory, it is noted that the variation in refractive index in the acousto-optic medium layer may be caused by a perturbation of the acousto-optic medium layer caused by compression and expansion of regions in the acousto-optic medium layer by the acoustic wave. It should further be noted that the acoustic wave may provide a slight thermal effect due to absorption of the acoustic wave which may also translate to a change of refractive index.

The device is integrated in that all components of the device are united in a single structure. Thus, the components may be attached to each other. This implies that the integrated device may be very compact.

The integrated device may be configured to provide a fixed, well-defined relationship between the planar waveguide and the acousto-optic medium layer. Similarly, the integrated device may be configured to provide a fixed, well-defined relationship between the acoustic wave generator and the acousto-optic medium layer.

The integrated device may for instance utilize available technology for high quality manufacturing of miniaturized components, such as using available complementary metal-oxide-semiconductor (CMOS) manufacturing processes. In this regard, the integrated device may be formed using materials that are compatible with CMOS manufacturing processes. However, it should be realized that the integrated device need not necessarily use CMOS manufacturing processes and that other materials may therefore be used.

It should be realized that the planar waveguide may be provided in a separate plane from the acousto-optic medium layer. In such case, the light signal may be received through a top or bottom surface of a plane of the acousto-optic medium layer. However, according to an alternative, the planar waveguide may be provided in a common plane of the acousto-optic medium layer such that the light signal may be received by the acousto-optic medium through a side wall or edge of the acousto-optic medium in the acousto-optic medium layer.

The waveguide may be planar in that the waveguide extends along a plane. This plane may be parallel to or common with a plane of the acousto-optic medium layer. The waveguide may have any cross-sectional shape and may follow any path within the plane.

The acoustic wave generator may be provided in a separate plane from the acousto-optic medium layer or in a common plane of the acousto-optic medium layer.

Thus, the acoustic wave may be received by the acousto-optic medium through a top or bottom surface of a plane of the acousto-optic medium layer, or through a side wall or edge of the acousto-optic medium.

The acoustic wave generator may comprise an acoustic wave resonator which may be formed in an integrated manner in the integrated device. The acoustic wave resonator may for instance be achieved using a piezoelectric material arranged between two conductive layers (electrodes). The acoustic wave generator may be configured to receive control signals providing an oscillation frequency driving a resonance in the piezoelectric material for generating the acoustic wave.

The acoustic wave generator may be formed by thin films, which may be particularly suitable for integrating the acoustic wave generator with other components of the integrated device, including the acousto-optic medium layer and the planar waveguide.

As used herein, the term "*light*" should be broadly construed as to not be limited to visible light. Rather, light should be interpreted to encompass other parts of the electro-magnetic spectrum, including for instance ultraviolet light and infrared light.

According to an embodiment, the acousto-optic medium layer defines a first plane, and the waveguide is arranged in a waveguide layer defining a second plane different than the first plane, wherein the waveguide is configured to guide the light signal in a direction along the second plane and to output the light signal out of the second plane towards the first plane.

Thus, the planar waveguide may be formed in a separate layer from the acousto-optic medium layer. This provides a large freedom of design in that the planar waveguide may be formed in a waveguide layer that may provide any desired structure of the planar waveguide.

In addition, it may facilitate simple manufacturing of the integrated device as the waveguide may be formed in a separate plane from the acousto-optic medium layer. Thus, manufacturing of the waveguide may be even completely separated from manufacturing of the acousto-optic medium layer. The waveguide may be formed on a separate substrate from the acousto-optic medium layer and may later be easily bonded to the acousto-optic medium layer for forming the integrated device.

According to an embodiment, the acousto-optic medium layer is arranged between the waveguide and the acoustic wave generator such that the light signal is received into the acousto-optic medium layer through a first surface of the acousto-optic medium layer and the acoustic wave is received into the acousto-optic medium layer through a second surface of the acousto-optic medium layer opposite to the first surface.

This further ensures that a simple structure of the integrated device is provided. Each of the waveguide, the acousto-optic medium and the acoustic wave generator is formed in a separate plane facilitating simple manufacturing and facilitating a freedom of design of each of the separate components.

The light signal propagating through the acousto-optic medium layer from a first surface will thus meet an acoustic wave propagating through the acousto-optic medium layer from an opposite second surface. This may imply that an efficient diffraction may be provided.

According to an alternative, the acoustic wave generator and the waveguide may be arranged at a common side in relation to the acousto-optic medium layer. Thus, both the light signal and the acoustic wave may be received into the acousto-optic medium layer through the first surface. For instance, the waveguide layer may be arranged between the acoustic wave generator and the acousto-optic medium layer. Such an arrangement of the waveguide, the acoustic wave generator and the acousto-optic medium layer may be typically used in a set-up wherein the diffracted light signal is coupled back into a waveguide in the waveguide layer, since it may not be suitable to output light from the integrated device through a layer in which the acoustic wave generator is arranged.

According to an embodiment, the waveguide is configured to output the light signal into the acousto-optic medium layer and the acoustic wave generator is configured to output the acoustic wave into the acousto-optic medium layer such that the diffracted light signal is output from the acousto-optic medium layer through the first surface.

Thus, the integrated device is configured to diffract light back towards the first surface from which the light signal is input into the acousto-optic medium. This implies that the diffracted light signal is inevitably separated from non-diffracted light which propagates from the first surface of the acousto-optic medium layer towards the second surface of the acousto-optic medium layer. This arrangement ensures that a very high extinction ratio may be provided by the integrated device.

According to an embodiment, the integrated device further comprises a light absorption layer, wherein the acousto-optic medium layer is arranged between the light absorption layer and the waveguide layer, wherein the light absorption layer is configured to absorb light of the light signal not being diffracted and passing through the acousto-optic medium layer.

This implies that the light signal propagating through the first surface of the acousto-optic medium layer will be incident on the light absorption layer after passing the second surface of the acousto-optic medium layer. Hence, non-diffracted light of the light signal may be absorbed by the light absorption layer.

This may ensure that no stray light is formed by the non-diffracted light and may ensure that optical cross-talk between components on the integrated device is avoided.

This also ensures that any light signal provided by the waveguide in an off-state of the integrated device (no diffracted light signal to be provided) may be absorbed in the light absorption layer.

The light absorption layer may be arranged between the acousto-optic medium layer and the acoustic wave generator. The light absorption layer may be configured to allow propagation of acoustic waves through the light absorption layer with no or minimal loss such that the acoustic waves generated by the acoustic wave generator may propagate into the acousto-optic medium layer.

According to another embodiment, the integrated device further comprises at least one anti-reflection coating. The integrated device may comprise a first anti-reflection coating between the waveguide layer and the acousto-optic medium layer and a second anti-reflection coating between the acousto-optic medium layer and the light absorption layer.

The anti-reflection coating may ensure that no light of the light signal passing from one medium to another is reflected, such that undesired stray light is avoided.

The first anti-reflection coating may ensure that the light signal being output from the waveguide into the acousto-optic medium layer is not partially reflected at the first surface of the acousto-optic medium layer.

The second anti-reflection coating may ensure that non-diffracted light passing from the acousto-optic medium layer is not partially reflected at the second surface of the acousto-optic medium layer.

According to an embodiment, the integrated device further comprises an optics layer, wherein the waveguide layer is arranged between the optics layer and the acousto-optic medium layer.

The optics layer may provide an optical function on the diffracted light signal. For instance, the optics layer may be configured to shape or focus a beam formed by the diffracted light signal.

The optics layer may be configured to provide optics components in a flat planar layer. This may be achieved for instance by an electro-magnetic metasurface, which may be provided with geometrical structures having a size smaller than a wavelength of the light signal, wherein a plurality of geometrical structures may be arranged within the optics layer so as to provide an overall optical function on the diffracted light signal.

The use of the optics layer may ensure that the integrated device is able to further control the diffracted light signal within a compact integrated device.

According to an embodiment, the integrated device further comprises control electronic circuitry arranged in a layer such that the acousto-optic medium layer is arranged between the layer in which the control electronic circuitry is arranged and the waveguide layer.

The control electronic circuitry may for instance comprise circuitry for controlling and generating a drive signal driving the acoustic wave generator. Thus, the integrated device may provide a complete functionality in controlling diffraction of a light signal within a single package.

The control electronic circuitry may comprise CMOS circuitry, which may for instance be formed on a silicon substrate. Such silicon substrate may, after the control electronic circuitry has been formed, be bonded so as to be integrated with the acoustic wave generator. According to an alternative, the acoustic wave generator may be formed directly on the substrate carrying the control electronic circuitry such that the control electronic circuitry and the acoustic wave generator are integrated. Hence, the acoustic wave generator may be formed in a layer above the layer in which the control electronic circuitry is formed. Thus, the acoustic wave generator may be arranged between the control electronic circuitry and the acousto-optic medium layer. The control electronic circuitry may further be connected to the acoustic wave generator for providing control signals to the acoustic wave generator. However, it should be realized that the control electronic circuitry is not necessarily arranged such that the acoustic wave generator is arranged between the control electronic circuitry and the acousto-optic medium layer. For instance, the control electronic circuitry may be arranged side-by-side with the acoustic wave generator.

The control electronic circuitry may further be configured to provide control of other components of the integrated device. For instance, the control electronic circuitry may be configured to control a light source providing input of the light signal into the planar waveguide or may be configured to control other components affecting the light signal propagating in the planar waveguide.

According to an embodiment, the integrated device is configured to output the light signal based on first order Bragg diffraction between the light signal and the variation in the refractive index of the acousto-optic medium layer based on the acoustic wave. According to an embodiment, the Bragg diffraction occurs at an angle of at least 30°, such as at least 60° or at least 70°.

Efficient Bragg diffraction may be provided if an interaction length between the light signal and the variation in the refractive index of the acousto-optic medium layer is sufficiently large. If the interaction length is sufficiently large, only first order Bragg diffraction will occur, and no light is output in higher diffraction orders. If the first order Bragg angle is increased, the interaction length for efficient Bragg diffraction is reduced. Thus, thanks to the integrated device being configured such that the first order Bragg diffraction occurs at a relatively large angle, a relatively short interaction length may be needed.

In addition, the planar waveguide may comprise an output end, which may for instance be formed by a grating coupler at the output end of the planar waveguide. This output end of the waveguide may be configured to face the first surface of the acousto-optic medium layer. The grating coupler may be configured to re-direct light propagating in the waveguide layer to be output out of the plane into the acousto-optic medium layer. An exit angle for the light signal output by the waveguide may preferably be as small as possible, the exit angle being defined as an angle between the propagation direction of light output from the waveguide and a normal to the second plane (plane of waveguide layer). The small exit angle may imply that existence of higher order modes of output of light from the grating coupler are avoided. This may further facilitate that stray light from the integrated device may be minimized.

Having a small exit angle of light from the waveguide may also imply that an incidence angle is large between a direction of propagation of light and a wavefront of the acoustic wave (defining a line having high (or low) refractive index in the acousto-optic medium layer corresponding to a surface of a grating formed by the acoustic wave). If the acoustic wave propagates perpendicularly through the acousto-optic medium layer, the incidence angle equals $90° - \theta_g$, where $\theta_g$ is the exit angle. This incidence angle is equal to the Bragg angle of first order Bragg diffraction. Hence, a desire to use a small exit angle of light from the waveguide may also imply that a large angle of Bragg diffraction should be used such as Bragg diffraction occurring at an angle of at least 30°, such as at least 60° or at least 70°. Typically, an exit angle of 10° may be used.

The incidence angle may be referred to herein as being an angle with regard to an acoustic grating defined in the acousto-optic medium layer. It should be realized that such definition is based on the possibility of modeling an effect on the refractive index in the acousto-optic medium layer as a grating. Even though the incidence angle is discussed in relation to the acoustic grating, it should be viewed as a description of interaction of the light signal with the variation of refractive index provided by the acoustic wave and not be taken as a statement that the acoustic wave propagating in the acousto-optic medium layer necessarily defines an acoustic grating therein.

It should also be realized that the acoustic wave may define a curved wavefront instead of a planar wavefront, such that the acoustic grating may not necessarily be defined by straight, parallel lines. Use of curved acoustic wavefront implies that interaction efficiency between the light signal and the variation in refractive index of the acousto-optic medium layer caused by the acoustic wave may increase.

It should further be realized that Bragg diffraction of the light signal may in embodiments occur at an angle smaller than 30°. For instance, if the light signal is received by the acousto-optic medium through a side wall or edge of the acousto-optic medium, the incidence angle of the light signal onto the acoustic grating may be smaller than 30°. Thus, in embodiments, the Bragg diffraction may occur at a non-zero angle.

According to an embodiment, the integrated device is configured to modulate amplitude of the light signal based on controlling power of the acoustic wave.

Thus, the integrated device provides a simple manner of providing amplitude modulation of the diffracted light signal. By controlling the acoustic wave generator to control power of the acoustic wave, the amplitude of the diffracted light signal may be controlled in a direct manner.

Using control of power of the acoustic wave, direction of propagation of the diffracted light signal will not be changed. Thus, the integrated device may provide an amplitude modulation of the diffracted light signal while providing a fixed direction of the diffracted light signal.

According to an embodiment, the integrated device is configured to control diffraction of the light signal in the acousto-optic medium layer to provide beam steering of the light signal output by the integrated device based on controlling a frequency of the acoustic wave.

The integrated device may be configured to provide beam steering to control a direction in which the diffracted light signal is output. Such control may be provided by controlling the frequency of the acoustic wave. This implies that a diffraction angle may be changed by changing a frequency of the acoustic wave.

However, changing frequency of the acoustic wave without changing the incidence angle of the light signal onto the acoustic grating defined by the acoustic wave may only allow beam steering within a limited bandwidth while maintaining a Bragg condition for light diffraction. In addition, this bandwidth scales inversely with the frequency of the acoustic wave. Hence, if a relatively low frequency of the acoustic wave is used, the beam steering may be provided by only controlling the frequency.

However, in order to provide beam steering within a wide range of output directions of the diffracted light for a high frequency of the acoustic wave, the incidence angle may need to be changed in addition to the change of frequency of the acoustic wave. This may be achieved by utilizing a plurality of acoustic wave generators which may be controlled for controlling an angle defined by overall variation of the refractive index in the acousto-optic medium layer.

According to an embodiment, the acoustic wave generator is part of a set of a plurality of acoustic wave generators, wherein each acoustic wave generator of the plurality of acoustic wave generators is configured to generate and output an acoustic wave into the acousto-optic medium layer, wherein the acousto-optic medium layer is configured to undergo an overall variation of the refractive index in dependence of the propagation of a plurality of acoustic waves from the plurality of acoustic wave generators in the acoustic medium layer, wherein the integrated device is configured to control a relation between the acoustic waves in the plurality of acoustic waves in the acousto-optic medium for controlling the overall variation of the refractive index.

Thus, using a plurality of acoustic wave generators, a simple manner of controlling the overall variation of the refractive index within the acousto-optic medium layer is provided. The variation of the refractive index may be controlled such that an angle of an overall acoustic wavefront formed by the plurality of acoustic waves in relation to the plane of the acousto-optic medium layer may be controlled. This implies that the incidence angle of the incoming light signal onto the acoustic grating defined by the plurality of acoustic waves within the acousto-optic medium layer may be controlled. In combination with changing the frequency of the acoustic waves, the direction of diffracted light meeting the Bragg condition for light diffraction may be changed. This allows beam steering of a strong diffracted light signal within a wide range of output angles of the diffracted light signal from the integrated device.

The relation between the acoustic waves in the plurality of acoustic waves may be controlled by controlling starting times of the acoustic wave generators, such that the acoustic wave generators may be configured to start outputting an acoustic wave at different starting times. Alternatively, the relation between the acoustic waves in the plurality of acoustic waves may be controlled by controlling phase delays of the acoustic waves output by the acoustic wave generators.

According to an embodiment, the acoustic wave generators are configured to output the plurality of acoustic waves into the acousto-optic medium layer such that the acoustic waves interfere within the acousto-optic medium layer.

The interference of the acoustic waves may define lines of constructive and destructive interference in the acousto-optic medium layer so as to define the overall wavefront of the plurality of acoustic waves which further defines an overall variation of the refractive index. By changing a phase relation between acoustic waves output by different acoustic wave generators, an angle of a line of constructive interference in relation to the plane of the acousto-optic medium layer will be changed. Thus, the incidence angle of the light signal onto the acoustic grating defined by the plurality of acoustic waves within the acousto-optic medium layer may be controlled.

According to another embodiment, each acoustic wave generator is configured to output the acoustic wave into an individual region in the acousto-optic medium layer such that the variation in refractive index within each of the individual regions associated with the acoustic wave generators define an overall variation of the refractive index in the acousto-optic medium layer.

The individual regions may together control an overall or combined variation in refractive index within the acousto-optic medium layer. The overall variation in refractive index may define lines of high (or low) refractive index in the acousto-optic medium layer extending over the individual regions. By controlling a relation between acoustic waves output by different acoustic wave generators, a relation between the acoustic waves propagating in individual regions of the acousto-optic medium layer may be controlled. Thus, an angle of a line of high (or low) refractive index in relation to the plane of the acousto-optic medium layer may be changed. Hence, the incidence angle of the light signal onto the acoustic grating defined by the plurality of acoustic waves within the acousto-optic medium layer may be controlled.

The plurality of acoustic wave generators may be arranged in a regular manner. For instance, the plurality of acoustic wave generators may be arranged in a one-dimensional array or a two-dimensional array for controlling the variation in refractive index in the acousto-optic medium layer in one or two dimensions, respectively.

However, it should be realized that the plurality of acoustic wave generators need not necessarily be arranged in a regular manner. An irregular arrangement of the acoustic wave generators may be used for additional reduction of diffraction of the light signal in undesired directions.

According to an embodiment, the acoustic wave generator is configured to generate the acoustic wave having a frequency of at least 1 GHz, such as at least 2 GHz, such as at least 10 GHz.

The frequency of the acoustic wave should be adapted to the angle of incidence of the light signal onto the acoustic grating defined by acoustic wave(s) in the acousto-optic medium layer such that first order Bragg diffraction of the light signal occurs. The angle of Bragg diffraction is also dependent on a wavelength of light of the light signal and on the acoustic velocity of an acoustic mode of the acoustic wave in the acousto-optic medium layer. Thus, by generating the acoustic wave having an appropriate frequency in relation to other factors, Bragg diffraction of the light signal may be provided. If the incidence angle of the light signal onto the acoustic grating is small, the frequency of the acoustic wave may be small while allowing Bragg diffraction of the light signal. However, in such case efficient Bragg diffraction in a single order may require a relatively large interaction length between the light signal and the acoustic grating. Further, in order to ensure that higher order modes of output of light from the waveguide is avoided, a small exit angle should be provided which may further imply that Bragg diffraction occurs at a large angle.

Thus, in order to ensure that no or insignificant amounts of stray light is output, the incidence angle of the light signal should be relatively large. This also implies that the acoustic wave should have a high frequency. By generating an acoustic wave having a frequency of at least 1 GHz, the integrated device may be configured to provide Bragg diffraction of the light signal at a relatively large angle of incidence. Using a higher frequency may further allow the integrated device to be configured to provide Bragg diffraction at even larger angles of incidence. Thus, the acoustic wave generator may advantageously be configured to generate the acoustic wave having a frequency of at least 2 GHz or even having a frequency of at least 10 GHz.

It should be realized that it may be difficult to generate acoustic waves having very high frequencies. Thus, it may be preferred that the integrated device is designed such that the acoustic wave generator need not generate an acoustic wave with too high frequency. For instance, the acoustic wave generator may be configured to generate the acoustic wave having a frequency of 25 GHz or smaller, such as a frequency of 20 GHz or smaller.

According to an embodiment, a material of the acousto-optic medium layer is sapphire, silicon dioxide, tellurium dioxide or titanium dioxide.

These may be suitable materials for providing desired properties for propagating the light signal in the acousto-optic medium layer and for propagating the acoustic wave in the acousto-optic medium layer so as to form a variation in refractive index in the acousto-optic medium layer. Further, these materials may be used with CMOS manufacturing technology such that high quality and repeatable manufacturing processes for CMOS technology may be utilized also in the manufacturing of the integrated device.

However, it should be realized that other materials for the acousto-optic medium layer may be used. For instance, the material of the acousto-optic medium layer may be lithium niobate, which may have suitable properties for propagating the light signal and for propagating the acoustic wave so as to form a variation in refractive index in the acousto-optic medium layer. However, lithium niobate is not compatible with CMOS manufacturing technology.

The material of the acousto-optic medium layer should preferably have a relatively low attenuation of the acoustic wave. This implies that a relatively low power of the acoustic wave may be provided while the acoustic wave is able to propagate substantially into the acousto-optic medium layer. Also, this implies that heating of the acousto-optic medium layer due to absorption of the acoustic wave may be limited.

However, the acoustic wave may advantageously be fully absorbed before propagating entirely through the acousto-optic medium layer. This may ensure that cross-talk is avoided between different integrated devices or between different units for diffracting a light signal arranged side-by-side on the same integrated device.

Higher frequencies of the acoustic wave have higher absorption. As described above, the integrated device may be arranged such that use of a high frequency of the acoustic wave may be needed in order to provide desired diffraction of light. This use of a high frequency of the acoustic wave may thus also serve to ensure that the acoustic wave is fully absorbed in the acousto-optic medium layer such that cross-talk is avoided.

The integrated device may be configured to diffract all light in the light signal through Bragg diffraction, if the light signal interacts with the variation in refractive index over a sufficiently long interaction length. Thus, by ensuring that the light signal may interact over a full interaction length, essentially the entire light signal output by the waveguide may be diffracted to form the diffracted light signal. The acousto-optic material may thus preferably provide an efficient diffraction, providing a short full interaction length. The acousto-optic material layer may further advantageously have a sufficient thickness to accommodate the full interaction length. If the acousto-optic material layer is thin, the full interaction length may still be provided by generating a high power of the acoustic wave. This may however imply that the acoustic wave may not be fully absorbed in the acousto-optic medium layer.

According to a second aspect, there is provided a method for diffracting a light signal in an integrated device, said method comprising: guiding the light signal along a planar waveguide of the integrated device; outputting the light signal from the waveguide into an acousto-optic medium layer of the integrated device; generating an acoustic wave and outputting the acoustic wave into the acousto-optic medium layer; propagating the light signal defining a planar or curved light wavefront in the acousto-optic medium layer and propagating the acoustic wave in the acousto-optic medium layer, wherein the acousto-optic medium layer undergoes a variation in refractive index in dependence of the propagation of the acoustic wave in the acousto-optic medium layer; causing diffraction of the light signal in the acousto-optic medium layer based on the variation in the refractive index, wherein diffraction of the light signal changes direction of propagation of the light signal.

Effects and features of this second aspect are largely analogous to those described above in connection with the first aspect. Embodiments mentioned in relation to the second aspect are largely compatible with the first aspect.

Thanks to the method, a light signal is output from the waveguide into the acousto-optic medium layer. The light signal may thus define a planar or curved light wavefront in the acousto-optic medium layer that may be modeled as free-space propagation of light in the acousto-optic medium layer. The method may further utilize light diffraction based on the planar or curved light wavefront being incident on the variation in refractive index generated by the propagation of the acoustic wave in the acousto-optic medium layer. In this manner, the light signal may be diffracted such that the diffracted light signal is spatially separated from non-diffracted light. Also, no or insignificant amounts of stray light may be provided.

In addition, when no output of the diffracted light signal is desired, the diffraction of the light signal may be easily switched off, by simply switching off the generation of the acoustic wave. In such case, no diffraction of the light signal is provided, and power consumption for controlling the light signal may be very low as the acoustic wave generator may be completely switched off.

Further, the method provides a very high extinction ratio, such as 50 dB, since there is no diffracted light being output when the acoustic wave is not present in the acousto-optic medium layer.

According to a third aspect, there is provided a method for manufacturing an integrated device for diffracting a light signal, said method comprising: forming an acoustic wave generator on a first substrate defining an acousto-optic medium layer, whereby the acoustic wave generator is configured to generate an acoustic wave and to output the acoustic wave into the acousto-optic medium layer; forming a waveguide in a waveguide layer, wherein the waveguide is configured to guide the light signal along the waveguide, wherein the waveguide is formed on a second substrate; bonding the second substrate to the acousto-optic medium layer with the waveguide layer facing the acousto-optic medium layer, such that the acousto-optic medium layer is arranged between the waveguide and the acoustic wave generator, whereby the waveguide is configured to output the light signal from the waveguide into the acousto-optic medium layer; wherein the acousto-optic medium layer is configured to undergo a variation in refractive index in dependence of the propagation of the acoustic wave in the acousto-optic medium layer; whereby the acousto-optic medium layer causes diffraction of the light signal to form a diffracted light signal, wherein a direction of propagation of the light signal is changed based on the variation in the refractive index.

Effects and features of this third aspect are largely analogous to those described above in connection with the first and second aspects. Embodiments mentioned in relation to the third aspect are largely compatible with the first and second aspects.

Thus, a first substrate may be used for forming the acousto-optic medium layer and the acoustic wave generator, while a second substrate may be used for forming the waveguide. This implies that each of these parts may be separately manufactured such that a high degree of freedom may be provided both for the forming of the acoustic wave generator in relation to the acousto-optic medium layer and for forming the waveguide. The method may further comprise bonding of the first substrate to the second substrate utilizing known techniques for bonding substrates. This ensures that the waveguide is arranged in a desired relation to the acousto-optic medium layer for providing desired diffraction of light by the integrated device.

The first substrate may be formed by the acousto-optic medium layer itself. Alternatively, a separate first substrate may be used with the acousto-optic medium layer formed on the first substrate. In such case, the first substrate may be removed before the second substrate is bonded to the acousto-optic medium layer.

It should further be realized that the second substrate is not necessarily bonded directly to the acousto-optic medium layer. Rather, a (thin) oxide layer may be deposited on the surface of the acousto-optic medium layer which is to face the waveguide layer. Additionally, an oxide layer may be formed on the waveguide layer. Such oxide layer may define a cladding for ensuring that a light signal is maintained within the waveguide. Thus, the bonding of the second substrate to the acousto-optic medium layer may be formed by an oxide-oxide bonding. Techniques for oxide-oxide bonding are readily available.

The method may further comprise removing the second substrate after bonding of the second substrate to the acousto-optic medium layer.

The method may further comprise forming control electronic circuitry. The control electronic circuitry may be formed on a third substrate, and the method may further comprise bonding the third substrate to a surface at which the acoustic wave generator is formed. The method may further comprise connecting the control electronic circuitry to the acoustic wave generator such that the control electronic circuitry may be used for controlling the acoustic wave generator. The control electronic circuitry may alternatively be directly formed on the acoustic wave generator, directly connecting the control electronic circuitry to the acoustic wave generator.

The control electronic circuitry may be connected to the acoustic wave generator before or after bonding of the second substrate to the acousto-optic medium layer.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic cross-sectional view of an integrated device according to a first embodiment.
Fig. 2 is a schematic cross-sectional view of an integrated device according to a second embodiment.
Fig. 3 is a schematic view of a plurality of acoustic wave generators configured to provide interference of a plurality of acoustic waves in an acousto-optic medium layer of the integrated device according to the second embodiment.
Fig. 4 is a schematic view of a plurality of acoustic wave generators configured to provide a plurality of acoustic waves in a plurality of individual regions of the acousto-optic medium layer of the integrated device according to the second embodiment.
Fig. 5 is a schematic top view of the integrated device according to the second embodiment.
Fig 6a is a graph illustrating output of a main lobe and sidelobes of a combined wavefront of a plurality of acoustic waves.
Fig. 6b is a schematic view illustrating a light signal being diffracted by an acoustic grating corresponding to the main lobe and another acoustic grating corresponding to a sidelobe.
Fig. 7a is a schematic cross-sectional view of an integrated device according to a third embodiment.
Fig. 7b is a schematic top view of the integrated device according to the third embodiment.
Fig. 8 is a flow chart of a method for diffracting a light signal according to an embodiment.
Figs 9a-j are schematic views illustrating a method for manufacturing an integrated device.

Detailed description

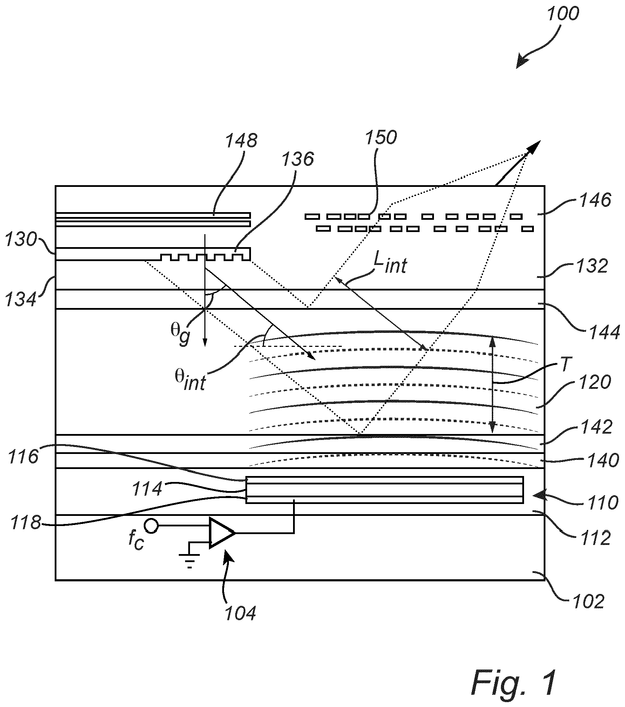

Referring now to Fig. 1, an integrated device 100 according to a first embodiment for diffracting a light signal will be described. Fig. 1 shows a cross-section of the integrated device 100.

The integrated device 100 is shown in Fig. 1 as forming a stack of layers. Each layer may extend in two dimensions defining a respective plane in two dimensions, wherein the layers are stacked such that the planes of the layers are arranged on top of and parallel with each other.

The stack of the integrated device 100 as shown in Fig. 1 will now be discussed in relation to bottom to top of the stack as shown in Fig. 1, with a layer being arranged above another layer meaning that the layer is arranged closer to the top as illustrated in Fig. 1. It should however be realized that the integrated device 100 need not in use be arranged in a particular orientation but may rather be flipped or rotated from the orientation shown in Fig. 1.

The integrated device 100 may comprise a substrate 102. The substrate 102 may be a semiconductor substrate, such as based on a silicon wafer. The substrate 102 may further comprise or carry control electronic circuitry 104. The control electronic circuitry 104 may comprise complementary metal-oxide-semiconductor (CMOS) electronics, which may be formed on the substrate 102. However, it should be realized that the control electronic circuitry 104 may alternatively be formed by thin-film technology.

The integrated device 100 need not necessarily include the control electronic circuitry 104. Rather, control signals for controlling components of the integrated device 100 may alternatively be provided from an external device.

The integrated device 100 comprises an acoustic wave generator 110. If the substrate 102 and/or control electronic circuitry 104 is present, the acoustic wave generator 110 may be formed in a layer arranged above the substrate 102.

The acoustic wave generator 110 may be formed in an acoustic wave generator layer 112 such that a smooth surface of the acoustic wave generator layer 112 is provided. The acoustic wave generator 110 may thus be surrounded by a suitable material, which may be transparent to acoustic waves so as not to attenuate acoustic waves generated and output by the acoustic wave generator 110.

The acoustic wave generator 110 may comprise an acoustic wave resonator which may generate an acoustic wave based on an electric driving signal. For instance, the acoustic wave generator 110 may comprise a piezoelectric film 114 arranged between a first electrode 116 and a second electrode 118. The acoustic wave generator 110 may thus receive a driving signal to the first electrode 116 and the second electrode 118, causing an acoustic wave to be output by the acoustic wave resonator. The acoustic wave resonator may be configured to generate the acoustic wave with a frequency of the electric driving signal.

The piezoelectric film 114 may be a high quality crystalline thin film such that acoustic waves of a high frequency may be formed with high quality. For instance, the piezoelectric film 114 may have a thickness of 100 - 1000 nm.

The acoustic wave generator 110 may for instance comprise a bulk acoustic wave resonator (BAWR), such as a regular BAWR, High Overtone Bulk Acoustic Wave Resonator (HBAR), or a Solidly Mounted Resonator (SMR).

The integrated device 100 further comprises an acousto-optic medium layer 120 arranged above the acoustic wave generator layer 112. The acoustic wave generator 110 is configured to output the generated acoustic wave into the acousto-optic medium layer 120. The acousto-optic medium layer 120 may be formed from a material providing low acoustic loss of the acoustic wave.

The material of the acousto-optic medium layer 120 is further a material in which light can interact with the acoustic wave. In particular, the material of the acousto-optic medium layer 120 may be configured to provide efficient diffraction of light based on a variation in refractive index in the acousto-optic medium layer 120 formed by the acoustic wave propagating in the acousto-optic medium layer 120.

The material of the acousto-optic medium layer 120 may be sapphire, silicon dioxide, such as quartz or fused silica, tellurium dioxide or titanium dioxide. However, other materials of the acousto-optic medium layer 120 may be used.

The integrated device 100 further comprises a waveguide 130. The waveguide 130 may be formed in a photonic integrated circuit (PIC) chip which is integrated onto the acousto-optic medium layer 120. In other words, the waveguide 130 may be formed in a waveguide layer 132.

The waveguide 130 is a planar waveguide extending in a plane, such as the plane defined by the waveguide layer 132 above the acousto-optic medium layer 120. The waveguide 130 may be configured to guide a light signal along the extension of the waveguide 130 in the plane. The waveguide 130 may for instance be formed from SiN, which may allow guiding light signals of a visible wavelength. However, it should be realized that other materials, such as silicon, may be used.

The waveguide 130 may be surrounded by a cladding material 134, such as silicon dioxide. The cladding material may have a suitable refractive index in relation to the refractive index of the material of the waveguide 130 such that total internal reflection of the light signal may occur within the waveguide 130 so as to facilitate the light signal to be guided by the waveguide 130.

The waveguide 130 may comprise an output end 136, at which the waveguide 130 is configured to output the light signal from the waveguide 130. The output end 136 may be configured such that the light signal is directed towards the acousto-optic medium layer 120.

In the embodiment shown in Fig. 1, the acousto-optic medium layer 120 defines a first plane and the waveguide layer 132 defines a second plane different than the first plane. The waveguide 130 is configured to guide the light signal in a direction along the second plane and to output the light signal out of the second plane towards the first plane. The waveguide 130 is thus configured to re-direct the light signal at the output end 136.

The output end 136 may be formed by a grating coupler for re-directing an outputting of the light signal. The grating coupler may be configured to provide output of the light signal in a single lobe or with insignificant amount of light output in sidelobes, if the light is output at a small exit angle $\theta_g$, i.e., an angle between a main direction of propagation of the output light and a normal to the plane of the planar waveguide 130. For instance, an exit angle $\theta_g$ smaller than 10° may be used. It should be realized that the exit angle $\theta_g$ is exaggerated in Fig. 1 for illustrative purposes.

The grating coupler at the output end 136 of the waveguide 130 may be configured to output a narrow optical beam. For instance, the grating coupler may be configured to output an optical beam having a diameter in a range of 10 - 100 $\mu$m.

The acousto-optic medium layer 120 may be configured to receive the light signal output by the waveguide 130 and may also be configured to receive the acoustic wave output by the acoustic wave generator 110. The acousto-optic medium layer 120 will undergo a variation in refractive index based on the propagation of the acoustic wave in the acousto-optic medium layer 120, wherein the refractive index defines propagation of light within the medium.

The light signal defines a planar or curved light wavefront in the acousto-optic medium layer 120 that may be modeled as free-space propagation of light in the acousto-optic medium layer 120. The variation in refractive index may have a periodicity within the acousto-optic medium layer 120, due to the propagation of the acoustic waves in the acousto-optic medium. The light signal being incident on the variation in refractive index may be diffracted in correspondence to an effect of a grating with a periodicity corresponding to the periodicity of the variation in refractive index, caused by the acoustic waves. The light signal may then be configured to be diffracted in a reflective manner by the variation in refractive index. Reference is made herein to the incoming light signal being incident on and diffracted by an acoustic grating. It should be realized that such reference is made in relation to the variation in refractive index being modeled as forming a grating in the acousto-optic medium layer 120. The acousto-optic medium layer 120 thus causes diffraction of the incoming light signal to form a diffracted outgoing light signal based on the variation in the refractive index (= acoustic grating, caused by the acoustic wave in the acousto-optic medium). The diffraction of the light signal changes the direction of propagation of the light signal.

The acoustic wave generator 110 may be configured to control the acoustic wave so as to generate a variation in refractive index in the acousto-optic medium layer 120 such that Bragg diffraction of the light signal being incident on the acoustic grating may be provided. This implies that the light signal may be strongly diffracted or even that essentially all light of the light signal may be diffracted at the Bragg angle. In order for Bragg diffraction to occur, an incidence angle $\theta_{inc}$ of the light signal onto the acoustic grating should closely correspond to the Bragg angle. This may be ensured by the acoustic wave generator 110 controlling the frequency of the acoustic wave.

The light signal may be diffracted based on first order Bragg diffraction. The light signal may interact with the acoustic grating in a sufficient interaction length such that the light signal is efficiently diffracted by first order Bragg diffraction and that no light is diffracted into higher orders of Bragg diffraction. This implies that no or insignificant amount of stray light may be caused by the diffraction of light signal being incident onto the acoustic grating in the acousto-optic medium layer 120.

In the embodiment shown in Fig. 1, the acousto-optic medium layer 120 is arranged between the waveguide 130 and the acoustic wave generator 110 such that the light signal is received into the acousto-optic medium layer 120 through a first surface of the acousto-optic medium layer 120 and the acoustic wave is received into the acousto-optic medium layer 120 through a second surface of the acousto-optic medium layer 120 opposite to the first surface.

The variation in refractive index within the acousto-optic medium layer 120 may be oriented along a direction of propagation of the acoustic wave. Thus, if the acoustic wave generator 110 is configured to output the acoustic wave such that the main direction of propagation is incident perpendicularly on the second surface, lines of equal refractive index within the acousto-optic medium layer 120 will be arranged parallel with the plane of the acousto-optic medium layer 120. This also implies that the incidence angle $\theta_{inc}$ corresponds to 90° - $\theta_g$ as illustrated in Fig. 1. First order Bragg diffraction is provided at an angle equal to the incidence angle $\theta_{inc}$. Thus, by providing the light signal and the acoustic wave through opposite surfaces, a large Bragg angle may be provided. Having a large Bragg angle implies that the interaction length between the light signal and the acoustic grating may be relatively short while providing efficient Bragg diffraction. Thus, by providing Bragg diffraction at a large Bragg angle may ensure that only first order Bragg diffraction may occur.

The diffracted light signal may be diffracted in a reflective manner. Thus, the diffracted light signal is directed back towards the first surface of the acousto-optic medium layer 120 and output from the acousto-optic medium layer 120 through the first surface.

The integrated device 100 may further comprise a light absorption layer 140. The light absorption layer 140 may be configured to absorb any non-diffracted light of the light signal passing through the acousto-optic medium layer 120. Thus, the acousto-optic medium layer 120 may be arranged between the waveguide layer 132 and the light absorption layer 140. Also, the light absorption layer 140 may be arranged above the acoustic wave generator layer 112.

Thanks to the light absorption layer 140 being configured to absorb non-diffracted light, optical cross-talk to other devices may be avoided. The light absorption layer 140 may thus be formed by a material having high absorbance of a wavelength of the light signal. For instance, if visible light is used, the light absorption layer 140 may be formed by amorphous silicon.

The integrated device 100 may further comprise a first anti-reflection coating 142 above the light absorption layer 140 and between the acousto-optic medium layer 120 and the light absorption layer 140. The first anti-reflection coating 142 may ensure that stray reflections do not emerge from light passing an interface between the acousto-optic medium layer 120 and the light absorption layer 140.

The integrated device 100 may further comprise a second anti-reflection coating 144 above the acousto-optic medium layer 120 and between the waveguide layer 132 and the acousto-optic medium layer 120. The second anti-reflection coating 144 may ensure that stray reflections do not emerge from light passing an interface between the waveguide layer 132 and the acousto-optic medium layer 120.

The integrated device 100 may further comprise an optics layer 146 arranged above the waveguide layer 132. Thus, the waveguide layer 132 is arranged between the optics layer 146 and the acousto-optic medium layer 120. The optics layer 146 may provide flat-optics components such that a flat layer may be arranged in the integrated device 100, providing a compact integrated device 100.

The optics layer 146 may incorporate a distributed Bragg reflector (DBR) 148 arranged above the grating coupler of the waveguide 130. The DBR 148 may serve to maximize efficiency of the grating coupler in directing light towards the acousto-optic medium layer 120.

The optics layer 146 may further incorporate optical component(s) arranged to receive the diffracted light signal from the acousto-optic medium layer 120. The optics layer 146 may for instance comprise a metasurface 150 configured to focus the diffracted light signal or to shape an emerging wavefront of the diffracted light signal.

The integrated device 100 provides a high modulation speed for controlling the diffracted light signal.

The modulation speed may correspond to a speed at which the integrated device 100 can modulate amplitude of the diffracted light signal or steer the beam of the diffracted light signal to a new resolvable spot.

The modulation speed $f_{mod}$ is proportional to a speed of the acoustic wave $v_a$ and inversely proportional to a thickness $T$ of the variation in refractive index (acoustic grating) in which interaction between the light signal and the acoustic grating occurs. In other words:

$$f_{mod} \propto \frac{v_a}{T} = \frac{v_a}{L_{int} \cos \theta_g},$$

where $L_{int}$ is the interaction length between the light signal and the acoustic grating in the acousto-optic medium layer 120. The relation between thickness $T$ and the exit angle $\theta_g$ holds when the waveguide 130 is parallel to the acousto-optic medium layer 120 and the acoustic wave is input at a normal incidence into the acousto-optic medium layer 120.

The interaction length for achieving near-unity diffraction of the light signal (i.e., to diffract all of the light signal into a single diffracted order, leaving almost no power for non-diffracted light), assuming that the light signal forms a collimated and non-diverging beam, scales according to:

$$L_{int} \propto \frac{\lambda^5}{n_B M_2^2 P_a^2},$$

where $\lambda$ is the wavelength of the light signal, $n_B$ is a refractive index of the acousto-optic medium layer 120, $M_2$ is a figure-of-merit which determines inherent acousto-optic efficiency of the acousto-optic medium layer 120 (higher $M_2$ implies a larger acousto-optic effect for a given acoustic power), and $P_a$ is power of acoustic beam input into the acousto-optic medium layer 120.

As such, the modulation speed scales according to:

$$f_{mod} \propto \frac{v_a n_B M_2^2 P_a^2}{\lambda^5 \cos \theta_g}.$$

Thus, the modulation speed is proportional to the square of acoustic driving power, which means that if the acoustic driving power is reduced (e.g., for reducing power consumption), the modulation speed will be substantially reduced. It may be possible to reduce the acoustic driving power while maintaining the modulation speed. However, this would imply that the interaction length $L_{int}$ is reduced, such that power of the diffracted signal is instead reduced.

The exit angle $\theta_g$ is preferably as small as possible. This provides mitigation of stray light since this may imply that no higher-order modes are output by the grating coupler of the waveguide 130. In addition, this also implies that the Bragg angle is large such that throughput of the light signal output by the waveguide 130 to the diffracted light signal may be very high. In particular, only first order Bragg diffraction may be provided.

The Bragg angle $\theta_B$ for the acoustic grating in the acousto-optic medium layer may be defined as:

$$\sin \theta_B = \frac{\lambda}{2 n_B v_a} f_a,$$

where $f_a$ is a frequency of the acoustic wave. With the arrangement of the embodiment in Fig. 1, the Bragg angle may further be defined as:

$$\theta_B = \theta_{inc} = \frac{\pi}{2} - \theta_g.$$

This sets a constraint on the frequency of the acoustic wave to be generated by the acoustic wave generator 110:

$$f_a = \frac{2 n_B v_a}{\lambda} \cos \theta_g.$$

As an illustrating example, using a longitudinal acoustic mode in tellurium dioxide, $v_a$ = 4200 m/s and $n_B \approx 2.26$. For a wavelength of the light signal of $\lambda$ = 800 nm, the frequency of the acoustic wave needs to be $f_a$ = 24 GHz * cos $\theta_g$. With a small exit angle $\theta_g$, the frequency of the acoustic wave will typically be in order of 10 - 20 GHz.

Thus, the acoustic wave generator 110 may be configured to generate the acoustic wave having a high frequency. For instance, the acoustic wave generator 110 may be configured to generate the acoustic wave having a frequency of at least 1 GHz, such as at least 2 GHz, such as at least 10 GHz.

It should also be realized that the speed of the acoustic wave $v_a$ may depend on an acoustic mode. For instance, for tellurium dioxide, the longitudinal acoustic mode typically has larger speed of the acoustic wave $v_a$ compared to a shear acoustic mode. The acousto-optic medium layer 120 may be configured to propagate the acoustic wave in a particular acoustic mode. Thus, if the acoustic wave generator is configured to generate an acoustic wave having a shear mode and if the acousto-optic medium layer 120 is configured to support propagation of the acoustic wave in shear mode, the required frequency of the acoustic wave may be decreased.

The acoustic wave generator 110 may be controlled to vary power of the acoustic wave generated by the acoustic wave generator 110. A power of the diffracted light signal may depend on acoustic power of the acoustic wave such that the power of the diffracted light signal may be changed by changing the acoustic power of the acoustic wave. In this manner, the integrated device 100 may be configured to modulate amplitude of the diffracted light signal.

The acoustic power may be controlled by controlling a voltage over the piezoelectric film 114. The acoustic power output by the acoustic wave resonator may be proportional to a squared voltage over the piezoelectric film 114. Thus, by controlling the voltage of the drive signal driving the acoustic wave resonator, the acoustic power may be controlled. This may in turn control the amplitude of the diffracted light signal.

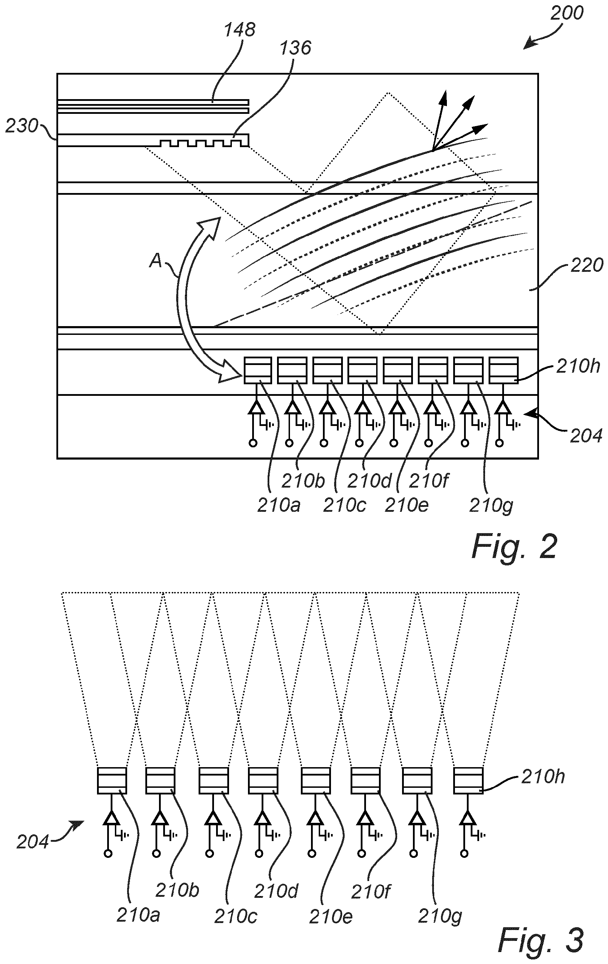

A fundamental operating frequency of an acoustic wave resonator is inversely proportional to a thickness of the acoustic wave resonator. Since the integrated device 100 may need to use high frequencies of the acoustic wave, the acoustic wave generator 110 may need to be produced with a high-quality thin-film growth of the piezoelectric film 114. For instance, aluminum nitride (AIN) or scandium-doped aluminum nitride (Sc-AIN) may be used as the piezoelectric material. Using a thickness of 300 nm of the piezoelectric film, a fundamental frequency of the acoustic wave of 20 GHz may be generated. Referring now to Fig. 2, an integrated device 200 according to a second embodiment will be discussed. The integrated device 200 may share features with the integrated device 100 of the first embodiment described above and only differences between the embodiments will be discussed below.

The integrated device 200 comprises a plurality of acoustic wave generators 210a-h. Each acoustic wave generator 210a-h of the plurality of acoustic wave generators is configured to generate and output an acoustic wave into the acousto-optic medium layer 220. For example each acoustic wave generator generates an acoustic wave in a different part of the acousto-optic medium. The acousto-optic medium layer 220 then undergoes an overall or combined variation of the refractive index in dependence of the propagation of a plurality of acoustic waves from the plurality of acoustic wave generators 21 0a-h in the acoustic medium layer 220.

The acoustic wave generators 210a-h may be controlled so as to control a relation between the acoustic waves and hence control an angle of an acoustic wavefront in the acousto-optic medium layer 220. This implies that an angle of lines of equal refractive index within the acousto-optic medium layer 220 is also controlled as indicated by arrow A in Fig. 2. Hence, the incidence angle of the light signal output by the waveguide 230 onto the acoustic grating defined by the overall variation of refractive index may be changed. This is useful in order to allow beam steering of the diffracted light signal over a wide angle.

The diffraction of the light signal may be altered in a different direction by changing the frequency of the acoustic wave. However, efficient diffraction is provided when conditions for providing Bragg diffraction are met and there is phase matching between the light signal and the acoustic grating. However, for a fixed incidence angle, phase matching breaks down when the frequency of the acoustic wave is changed too much from an original value (for which conditions for Bragg diffraction are exactly met).

As a result, diffraction efficiency drops and therefore there is a limited bandwidth $\Delta f_a$ over which the frequency of the acoustic wave may be changed while providing efficient diffraction of the light signal. The bandwidth scales according to:

$$\Delta f_a \propto \frac{n_B v_a^2 \cos\theta_{inc}}{\lambda L_{int} f_a}.$$

As described above, the integrated device 200 may operate at large incidence angles $\theta_{inc}$ (corresponding to a small value of $\cos\theta_{inc}$) and at large frequencies $f_a$ of the acoustic wave. This results in a very limited bandwidth $\Delta f_a$ of available frequencies of the acoustic wave.

Thus, the plurality of acoustic wave generators 210a-h may be used for controlling the incidence angle such that the frequency of the acoustic wave may also be changed while maintaining efficient diffraction of the light signal. This may be used for controlling diffraction of the light signal in the acousto-optic medium layer 220 to provide beam steering of the light signal output by the integrated device 200. The beam steering may thus be controlled based on controlling a frequency of the acoustic wave and controlling the acoustic waves output by the plurality of acoustic wave generators 210a-h for controlling the incidence angle of the light signal onto the acoustic grating in the acousto-optic medium layer 220.

Referring now to Fig. 3, the plurality of acoustic wave generators 210a-h may be configured to output a plurality of acoustic waves such that the acoustic waves interfere in the acousto-optic medium layer. By controlling a relation between the acoustic waves, for example by delay and/or frequency and/or amplitude and/or by turning on or off, an angle of an overall wavefront of the interference of the acoustic waves may be controlled. The plurality of acoustic wave generators 210a-h may thus for example act as a phased array.

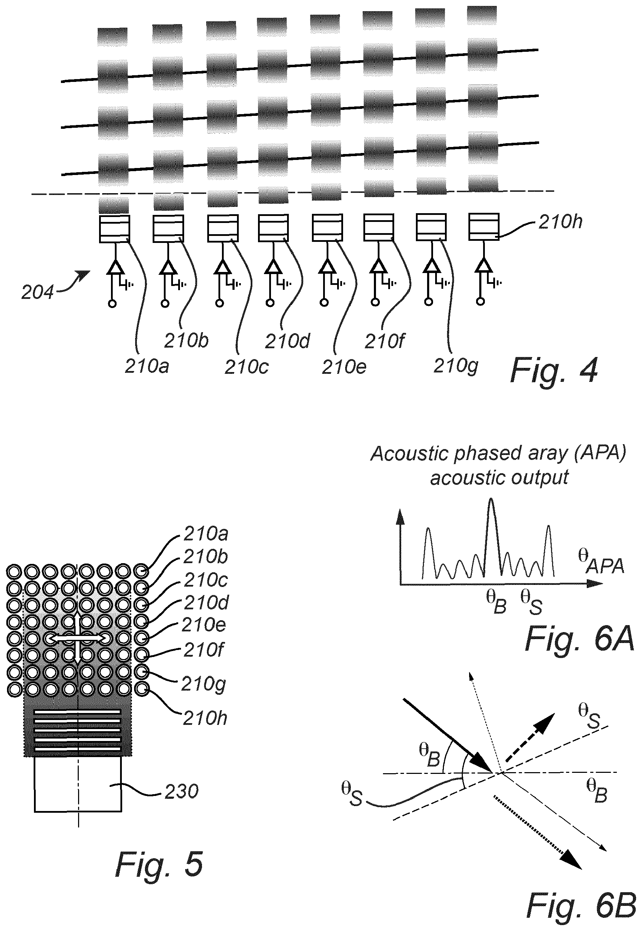

Referring now to Fig. 4, the plurality of acoustic wave generators 210a-h may alternatively be configured to output a plurality of acoustic waves into individual regions in the acousto-optic medium layer 220 such that the variation in refractive index within each of the individual regions associated with the acoustic wave generators 210a-h define an overall variation of the refractive index in the acousto-optic medium layer 220.

The individual regions may together control an overall variation in refractive index within the acousto-optic medium layer. The overall variation in refractive index may define lines of high (or low) refractive index in the acousto-optic medium layer 220 extending over the individual regions so as to define an overall wavefront of the plurality of acoustic waves in a corresponding manner to the wavefront that may act as a phased array using interference of the plurality of acoustic waves.

The relation between the acoustic waves may be controlled by controlling relative phase delays of the acoustic waves output by the different acoustic wave generators 210a-h. This may be achieved by providing tunable phase shifters for providing control of a phase shift of the electric driving signal for each of the plurality of acoustic wave generators 210a-h. Thus, the control electronic circuitry 204 may generate a common electric driving signal for all of the acoustic wave generators 210a-h. Each acoustic wave generator 210a-h may be associated with an individual phase shifter for tuning a phase shift of the electric driving signal provided to the acoustic wave resonator. Alternatively, the relation between the acoustic waves may be controlled by the control electronic circuitry 204 being configured to generate separate electric driving signal for each of the acoustic wave generators 210a-h and by controlling a relation of starting times of the electric driving signals.

The plurality of acoustic wave generators 210a-h may be arranged along a line, defining a one-dimensional array of acoustic wave generators 210a-h. The plurality of acoustic wave generators 210a-h may thus be configured to control tilt of an acoustic wavefront and hence tilt of an overall acoustic grating in the acousto-optic medium layer 220 in one dimension.

As shown in Fig. 5, illustrating a top view of the integrated device 200 of Fig. 2, the plurality of acoustic wave generators 210a-h may be arranged in a two-dimensional array of acoustic wave generators. This allows control of tilt of an acoustic wavefront and hence tilt of an overall acoustic grating in the acousto-optic medium layer 220 in two dimensions, which may provide beam steering over a full solid angle. The propagation of light in the integrated device 200 is indicated by shading in Fig. 5.

Using the plurality of acoustic wave generators 210a-h, it is possible to tune the incidence angle $\theta_{inc}$ of the light signal onto the acoustic grating caused by the acoustic wave in the acousto-optic medium layer 220. The incidence angle $\theta_{inc}$ may be tuned while the frequency $f_a$ of the acoustic wave is controlled. Hence, phase matching between the light signal and the acoustic grating may be maintained for different incidence angles such that efficient diffraction of the light signal based on Bragg diffraction may be provided. The changing of the incidence angle $\theta_{inc}$ also implies that an angle into which the diffracted light signal will be output is changed such that beam steering is provided.

An expected angular resolution $N_r$ of the beam steering may be given by:

$$N_r \approx \frac{\pi^2}{8}\left(\frac{L_{int}}{\lambda}\right).$$

Thus, the angular resolution is proportional to the interaction length $L_{int}$, while the speed of beam steering, corresponding to the modulation speed discussed above is inversely proportional to $L_{int}$. Thus, there is a compromise between angular resolution and speed of beam steering and the integrated device 200 may be designed in relation to desired beam steering characteristics.

Referring now to Fig. 6a, sidelobes may be generated in relation to the acoustic wavefront formed by the plurality of acoustic wave generators 210a-h. Each of the sidelobes defines lines of high (or low) refractive index in relation to the plane of the acousto-optic medium layer 220 defining other acoustic gratings in the acousto-optic medium layer 220 at other angles compared to a main lobe. The light signal can thus diffract in relation to such other acoustic gratings which may give rise to stray light output by the integrated device 200.

However, light diffraction may be very strong when conditions for Bragg diffraction are met, whereas no or very weak diffraction may be provided when conditions for Bragg diffraction are not met. As shown in Fig. 6b, a light signal (solid line) may have an incidence angle that correspond to the Bragg angle $\theta_B$ onto the acoustic grating defined by the main lobe of the plurality of acoustic waves (indicated by dash-dotted line). At this incidence angle $\theta_B$ of the light signal onto the acoustic grating, most of the light signal is diffracted into the diffracted light signal (indicated by thick long-dashed line) and only a small part of the light signal passes non-diffracted through the acoustic grating (indicated by thin long-dashed line).

The light signal (solid line) may also interact with the acoustic gratings defined by the sidelobes (indicated by dotted line). Such acoustic grating will have a different angle within the acousto-optic medium layer 220. Thus, the light signal will have a different incidence angle $\theta_S$ onto the acoustic grating corresponding to the sidelobe. This implies that there will be a phase mismatch and large reduction of diffraction efficiency compared to the Bragg diffraction occurring with relation to the acoustic grating defined by the main lobe. Hence, no or insignificant amount of light (indicated by thin short-dashed line) may be diffracted by the acoustic grating of the sidelobe, while a major part of the light signal interacting with the acoustic grating of the sidelobe will pass non-diffracted (indicated by thick short-dashed line).

In particular, as discussed above, using a high frequency $f_a$ of the acoustic wave, there is a limited bandwidth of the frequency in order for conditions for providing Bragg diffraction to be met. This also implies that increasing the frequency $f_a$ of the acoustic wave provides a more efficient reduction of diffraction at acoustic gratings defined by sidelobes.

It may be shown that sidelobe reduction of at least 40 dB for diffraction by acoustic gratings defined by sidelobes may be provided if the frequency $f_a$ of the acoustic wave is at least:

$$f_{a,min} = \frac{2 n_B v_a}{\lambda}.$$

For a wavelength of the light signal $\lambda$ = 800 nm in tellurium dioxide ($v_a$= 4200 m/s for longitudinal mode of acoustic wave and $n_B \approx 2.26$), the minimum acoustic frequency $f_{a,min}$ for completely avoiding diffraction by the acoustic gratings defined by sidelobes would correspond to 24 GHz.

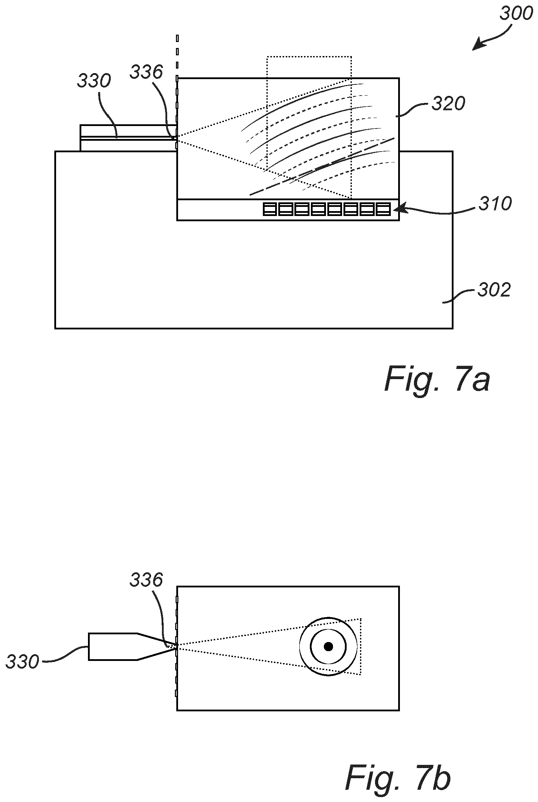

Referring now to Figs 7a-b, an integrated device 300 according to a third embodiment will be discussed. The integrated device 300 may share features with the integrated devices 100, 200 of the first and second embodiments described above and only differences between the embodiments will be discussed below.

As illustrated in Figs 7a-b, it should be realized that the integrated device 300 may not necessarily be formed by layers stacked on top of each other. At least some components may be arranged in a common layer to be arranged side-by-side instead of being arranged on top of each other.

Fig. 7a shows a cross-sectional view of the integrated device 300 and Fig. 7b shows a top view of the integrated device 300.

As illustrated in Fig. 7a, the integrated device 300 may comprise a substrate 302. The substrate 302 may be a semiconductor substrate, such as based on a silicon wafer. The substrate 302 may further comprise or carry control electronic circuitry.

The substrate 302 may define a recess in a top surface of the substrate 302. The integrated device 300 may further be provided with at least one acoustic wave generator 310 (illustrated here as a plurality of acoustic wave generators). The acoustic wave generators 310 may be arranged within the recess of the substrate 302.

The integrated device 300 may further comprise an acousto-optic medium layer 320 arranged within the recess of the substrate 302 and further extending above the top surface of the substrate 302. The acousto-optic medium layer 320 may thus be arranged above at least one acoustic wave generator 310 such that the acoustic wave generated by the acoustic wave generator 310 may be output into the acousto-optic medium layer 320.

The integrated device 300 may further comprise a planar waveguide 330 arranged on the top surface of the substrate 302. Thus, the substrate 302 provides a sufficient space on the top surface so as to allow space to mount the planar waveguide 330 on the top surface. For instance, the planar waveguide 330 may be formed in a photonic integrated circuit that may be mounted on the top surface of the substrate 302.

The waveguide 330 may be configured to output light in the plane in which the waveguide 330 is arranged. The light signal output by the waveguide 330 may thus be received through an edge or side-wall of the acousto-optic medium layer 320. As illustrated in Fig. 7b, the waveguide 330 may be provided with an inverted taper at the output end 336 for controlling a beam of the light signal being output into the acousto-optic medium layer 320.

The light signal may be incident on a variation in refractive index in the acousto-optic medium layer 320, which may define an acoustic grating in the acousto-optic medium layer 320. As illustrated in Fig. 7a, the light signal may form an angle in relation to the acoustic grating defined by the acoustic wave in the acousto-optic medium layer 320. This may ensure that light will be efficiently diffracted through first order Bragg diffraction while no light is diffracted into higher orders.

The diffracted light signal may be directed towards a top surface of the acousto-optic medium layer 320 for output therethrough. Thus, the diffracted light signal may be output through a first surface of the acousto-optic medium layer 320 opposite to a second surface of the acousto-optic medium layer 320 through which the acoustic wave is input into the acousto-optic medium layer 320. Further, the light signal may be input into the acousto-optic medium layer 320 through a third surface between the first surface and the second surface and that may be perpendicular to the first and second surfaces.

As shown in Figs 7a-b, the planar waveguide 330 and the acousto-optic medium layer 330 may be arranged side-by-side. It should be realized that such side-by-side relation may be achieved in other manners than the specific arrangement discussed in detail with reference to Figs 7a-b.

It should be realized that the integrated device 100, 200, 300 according to any of the above-described embodiments may comprise units arranged in parallel within the same integrated device for providing parallel diffraction of a plurality of light signals. Thus, the integrated device may be provided with a plurality of waveguides, which may be configured to output individual light signals into separate, individual diffraction sites of the acousto-optic medium layer. The individual diffraction sites may be sufficiently spaced apart so as not to cause any optical and acoustic cross-talk between the units.

In addition, the integrated device may comprise multiple sets of at least one acoustic wave generator. Each set may be configured to generate and output an acoustic wave into an individual diffraction site so as to define the acoustic grating in the diffraction site and provide diffraction of one light signal of the plurality of light signals at the diffraction site.

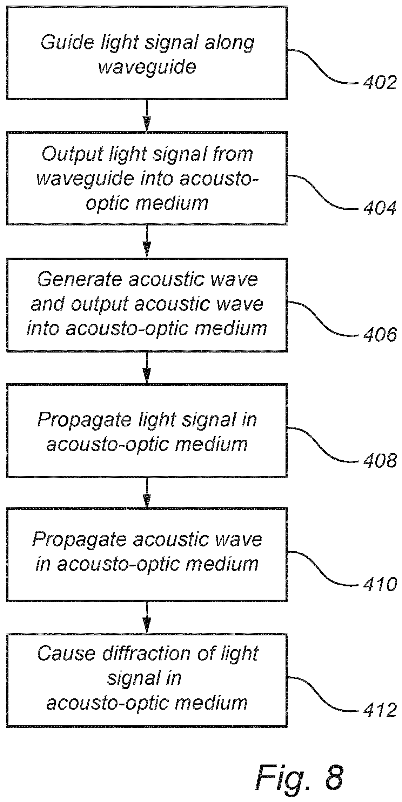

Referring now to Fig. 8, a method for diffracting a light signal will be described. The method may be provided using any of the embodiments of the integrated device described above.

The method comprises guiding 402 the light signal along a planar waveguide of the integrated device and outputting 404 the light signal from the waveguide into an acousto-optic medium layer of the integrated device.

The method further comprises generating 406 an acoustic wave and outputting the acoustic wave into the acousto-optic medium layer.

The method further comprises propagating 408 the light signal defining a planar or curved light wavefront in the acousto-optic medium layer and propagating 410 the acoustic wave in the acousto-optic medium layer. The acousto-optic medium layer undergoes a variation in refractive index in dependence of the propagation of the acoustic wave in the acousto-optic medium layer. The method further comprises causing 412 diffraction of the light signal in the acousto-optic medium layer based on the variation in the refractive index, wherein diffraction of the light signal changes direction of propagation of the light signal.

The light signal may be incident at an incidence angle on a grating defined by the variation in refractive index in the acousto-optic medium layer. The diffraction of the light signal may be provided by a first order Bragg diffraction. This implies a strong diffracted light signal may be provided while no or insignificant amounts of stray light may be provided.

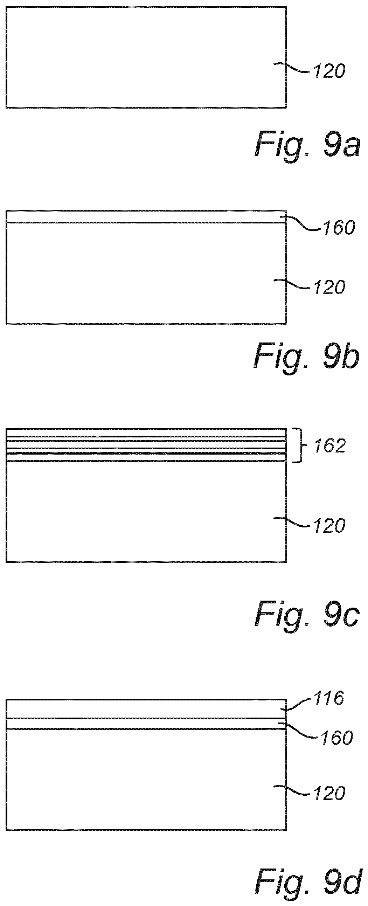

Referring now to Figs 9a-j, a method for manufacturing of the integrated device 100 will be described. It should be realized that other embodiments of the integrated device may be similarly manufactured by tweaking the method described herein.

As shown in Fig. 9a, a substrate 120 of an acousto-optic medium may be used. The substrate 120 may for instance be a wafer formed by quartz or sapphire as may be readily available. However, it should be realized that a substrate formed by tellurium dioxide or titanium dioxide may alternatively be used. Such substrates may also be available at wafer scale.

The substrate 120 may initially be cleaned and prepared in order to allow forming other structures on the substrate 120. The substrate 120 may form the acousto-optic medium layer 120 of the integrated device.

As shown in Fig. 9b, an etch-stop layer 160 may be formed on the substrate 120. For instance, a SiN layer may be deposited for forming the etch-stop layer 160. Alternatively, or additionally, as shown in Fig. 9c, a dedicated acoustic Bragg mirror 162 may be formed on the substrate 120. The Bragg mirror 162 may be used for improving performance by controlling the acoustic wave that is input into the acousto-optic medium layer 120 from the acoustic wave generator.

As shown in Fig. 9d, a first electrode 116 of the acoustic wave generator 110 may be deposited and patterned on the etch-stop layer 160. The etch-stop layer 160 may thus function to ensure that patterning of the electrode 116 does not affect the acousto-optic medium layer 120. The first electrode may be formed in a metal material. For instance, platinum (Pt) may be used for forming the first electrode.

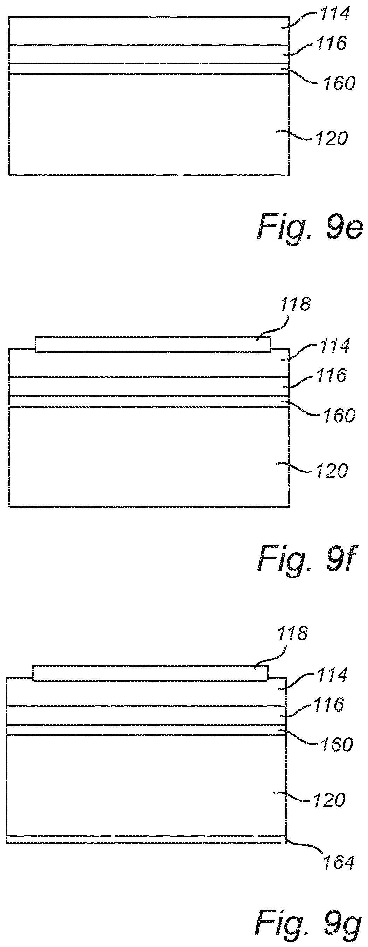

As shown in Fig. 9e, a piezoelectric material 114 may then be deposited on the first electrode 116. For instance, the piezoelectric material may be formed by AIN or Sc-AIN.

As shown in Fig. 9f, a second electrode 118 of the acoustic wave generator 110 may then be deposited and patterned on the piezoelectric material 114. The first and second electrodes 116, 118 with the piezoelectric material 114 sandwiched in-between may thus define an acoustic wave resonator of the acoustic wave generator 110. For instance, the second electrode 118 may be formed by aluminum.

Thus, based on the steps shown in Figs 9a-f, the acoustic wave generator 110 may be formed on a first substrate defining the acousto-optic medium layer 120.

As shown in Fig. 9g, the method may further comprise deposition of an oxide layer 164 on a surface of the substrate 120 opposite to the surface on which the acoustic wave generator 110 has been formed.

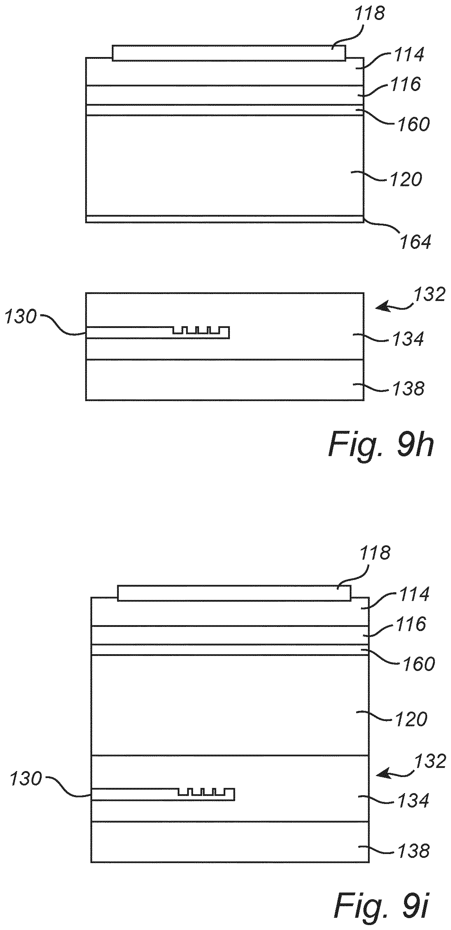

As shown in Fig. 9h, the method further comprises forming a waveguide 130 in a waveguide layer 132. The waveguide 130 may be formed in a photonic integrated circuit on a second substrate 138. The photonic integrated circuit may for instance be formed by standard plasma-enhanced chemical vapor deposition for forming a SiN waveguide 130.

The waveguide 130 may be surrounded by a cladding material 134, such as silicon dioxide, which may ensure that a light signal is properly guided by the waveguide 130. The cladding material 134 may also present an oxide surface of the photonic integrated circuit.

As shown in Fig. 9i, the method further comprises bonding the second substrate 138 to the acousto-optic medium layer 120. The bonding may be performed by oxide-oxide bonding. The second substrate 138 is bonded to the acousto-optic medium layer 120 such that the waveguide layer 132 faces the acousto-optic medium layer 120. The acousto-optic medium layer 120 will thus be arranged between the waveguide 130 and the acoustic wave generator 110.

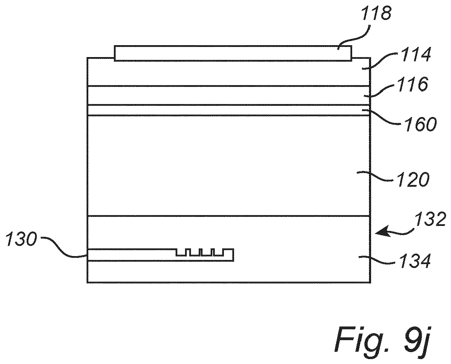

As shown in Fig. 9j, the method may further comprise removing of the second substrate 138.

In addition, the method may further comprise forming control electronic circuitry 104 on a third substrate 102, such as forming CMOS electronics on a silicon substrate. The method may further comprise bonding of the third substrate 102 to the acoustic wave resonator so as to connect control electronic circuitry to the acoustic wave resonator.

The bonding of the third substrate 102 to the acoustic wave resonator may be performed before or after the bonding of the second substrate 138 to the acousto-optic medium layer 120.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. An integrated device (100; 200; 300) for diffracting a light signal, said device (100; 200; 300) comprising:

   an acousto-optic medium layer (120; 220; 320);
   a planar waveguide (130; 230; 330) configured to guide the light signal along the waveguide (130; 230; 330) and configured to output the light signal from the waveguide (130; 230; 330) into the acousto-optic medium layer (120; 220; 320); and
   an acoustic wave generator (110; 210a-h; 310) configured to generate an acoustic wave and output the acoustic wave into the acousto-optic medium layer (120; 220; 320);
   wherein the acousto-optic medium layer (120; 220; 320) is configured to propagate the light signal defining a planar or curved light wavefront in the acousto-optic medium layer (120; 220; 320) and configured to propagate the acoustic wave in the acousto-optic medium layer (120; 220; 320);
   wherein the acousto-optic medium layer (120; 220; 320) is configured to undergo a variation in refractive index in dependence of the propagation of the acoustic wave in the acousto-optic medium layer (120; 220; 320); whereby the acousto-optic medium layer (120; 220; 320) causes diffraction of the light signal to form a diffracted light signal, wherein a direction of propagation of the light signal is changed based on the variation in the refractive index.

2. The integrated device according to claim 1, wherein the acousto-optic medium layer (120; 220) defines a first plane and wherein the waveguide (130; 230) is arranged in a waveguide layer (132) defining a second plane different than the first plane, wherein the waveguide (130; 230) is configured to guide the light signal in a direction along the second plane and to output the light signal out of the second plane towards the first plane.

3. The integrated device according to claim 2, wherein the acousto-optic medium layer (120; 220) is arranged between the waveguide (130; 230) and the acoustic wave generator (110; 210a-h) such that the light signal is received into the acousto-optic medium layer (120; 220) through a first surface of the acousto-optic medium layer (120; 220) and the acoustic wave is received into the acousto-optic medium layer (120; 220) through a second surface of the acousto-optic medium layer (120; 220) opposite to the first surface.

4. The integrated device according to claim 3, wherein the waveguide (130; 230) is configured to output the light signal into the acousto-optic medium layer (120; 220) and the acoustic wave generator (110; 210a-h) is configured to output the acoustic wave into the acousto-optic medium layer (120; 220) such that the diffracted light signal is output from the acousto-optic medium layer (120; 220) through the first surface.

5. The integrated device according to any one of claims 2-4, wherein the integrated device (100) further comprises a light absorption layer (140), wherein the acousto-optic medium layer (120) is arranged between the light absorption layer (140) and the waveguide layer (132), wherein the light absorption layer (140) is configured to absorb light of the light signal not being diffracted and passing through the acousto-optic medium layer (120).

6. The integrated device according to any one of claims 2-5, wherein the integrated device (100) further comprises an optics layer (146), wherein the waveguide layer (132) is arranged between the optics layer (146) and the acousto-optic medium layer (120).

7. The integrated device according to any one of claims 2-6, further comprising control electronic circuitry (104; 204) arranged in a layer such that the acousto-optic medium layer (120; 220) is arranged between the layer in which the control electronic circuitry (104; 204) is arranged and the waveguide layer (132).

8. The integrated device according to any one of the preceding claims, wherein the integrated device (100; 200; 300) is configured to output the light signal based on first order Bragg diffraction between the light signal and the variation in the refractive index of the acousto-optic medium layer (120; 220; 320) based on the acoustic wave, wherein the Bragg diffraction occurs at an angle of at least 30°.

9. The integrated device according to any one of the preceding claims, wherein the integrated device (100; 200; 300) is configured to modulate amplitude of the light signal based on controlling power of the acoustic wave.

10. The integrated device according to any one of the preceding claims, wherein the integrated device (100; 200; 300) is configured to control diffraction of the light signal in the acousto-optic medium layer (120; 220; 320) to provide beam steering of the light signal output by the integrated device (100; 200; 300) based on controlling a frequency of the acoustic wave.

11. The integrated device according to any one of the preceding claims, wherein the acoustic wave generator is part of a set of a plurality of acoustic wave generators (210a-h; 310), wherein each acoustic wave generator (210ah; 310) of the plurality of acoustic wave generators is configured to generate and output an acoustic wave into the acousto-optic medium layer (220; 320), wherein the acousto-optic medium layer (220; 320) is configured to undergo an overall variation of the refractive index in dependence of the propagation of a plurality of acoustic waves from the plurality of acoustic wave generators (210a-h; 310) in the acoustic medium layer (220; 320), wherein the integrated device (200; 300) is configured to control a relation between the acoustic waves in the plurality of acoustic waves for controlling the overall variation of the refractive index.

12. The integrated device according to any one of the preceding claims, wherein the acoustic wave generator (110; 210a-h; 310) is configured to generate the acoustic wave having a frequency of at least 1 GHz, such as at least 2 GHz, such as at least 10 GHz.

13. The integrated device according to any one of the preceding claims, wherein a material of the acousto-optic medium layer (120; 220; 320) is sapphire, silicon dioxide, tellurium dioxide or titanium dioxide.

14. A method for diffracting a light signal in an integrated device, said method comprising:

    guiding (402) the light signal along a planar waveguide of the integrated device;
    outputting (404) the light signal from the waveguide into an acousto-optic medium layer of the integrated device;
    generating (406) an acoustic wave and outputting the acoustic wave into the acousto-optic medium layer;
    propagating (408) the light signal defining a planar or curved light wavefront in the acousto-optic medium layer and propagating (410) the acoustic wave in the acousto-optic medium layer, wherein the acousto-optic medium layer undergoes a variation in refractive index in dependence of the propagation of the acoustic wave in the acousto-optic medium layer;
    causing (412) diffraction of the light signal in the acousto-optic medium layer based on the variation in the refractive index, wherein diffraction of the light signal changes direction of propagation of the light signal.

15. A method for manufacturing an integrated device (100; 200) for diffracting a light signal, said method comprising:

forming an acoustic wave generator (110; 210a-h) on a first substrate (120; 220) defining an acousto-optic medium layer, whereby the acoustic wave generator (110; 210a-h) is configured to generate an acoustic wave and to output the acoustic wave into the acousto-optic medium layer (120; 220);

forming a waveguide (130; 230) in a waveguide layer (132), wherein the waveguide (130; 230) is configured to guide the light signal along the waveguide (130; 230), wherein the waveguide (130; 230) is formed on a second substrate (138);

bonding the second substrate (138) to the acousto-optic medium layer (120; 220) with the waveguide layer (132) facing the acousto-optic medium layer (120; 220), such that the acousto-optic medium layer (120; 220) is arranged between the waveguide (130; 230) and the acoustic wave generator (110; 210a-h), whereby the waveguide (130; 230) is configured to output the light signal from the waveguide (130; 230) into the acousto-optic medium layer (120; 220);

wherein the acousto-optic medium layer (120; 220) is configured to undergo a variation in refractive index in dependence of the propagation of the acoustic wave in the acousto-optic medium layer (120; 220); whereby the acousto-optic medium layer (120; 220) causes diffraction of the light signal to form a diffracted light signal, wherein a direction of propagation of the light signal is changed based on the variation in the refractive index.

Fig. 1

*Fig. 2*

*Fig. 3*

Fig. 4

Fig. 5

Acoustic phased aray (APA)
acoustic output

$\theta_{APA}$

$\theta_B$ $\theta_S$

Fig. 6A

$\theta_S$

$\theta_B$

$\theta_S$

$\theta_B$

Fig. 6B

Fig. 7a

Fig. 7b

Guide light signal along
waveguide

— 402

Output light signal from
waveguide into acousto-
optic medium

— 404

Generate acoustic wave
and output acoustic wave
into acousto-optic medium

— 406

Propagate light signal in
acousto-optic medium

— 408

Propagate acoustic wave
in acousto-optic medium

— 410

Cause diffraction of light
signal in
acousto-optic medium

— 412

*Fig. 8*

*Fig. 9a*

*Fig. 9b*

*Fig. 9c*

*Fig. 9d*

*Fig. 9e*

*Fig. 9f*

*Fig. 9g*

Fig. 9h

Fig. 9i

*Fig. 9j*

Europäisches
Patentamt

European
Patent Office

Office européen
des brevets

# EUROPEAN SEARCH REPORT

Application Number

EP 23 17 3025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/265722 A1 (MASSACHUSETTS INST TECHNOLOGY [US]; WEST GAVIN [US]; RAM RAJEEV J [US]) 22 December 2022 (2022-12-22) | 1,9, 12-15 | INV. G02F1/33 |
| Y | * figure 1A * | 8,10,11 | |
| A | * paragraphs [0015], [0018], [0045] * | 2-7 | |
| Y | US 2018/074457 A1 (JOLLY SUNDEEP [US] ET AL) 15 March 2018 (2018-03-15) * figures 1, 5 * * claims 1, 11 * | 8,10,11 | |
| A | ANTONIO CRESPO POVEDA ET AL: "Optical waveguide devices modulated by surface acoustic waves", ARXIV.ORG, CORNELL UNIVERSITY LIBRARY, 201 OLIN LIBRARY CORNELL UNIVERSITY ITHACA, NY 14853, 7 November 2018 (2018-11-07), XP080935452, * page 12; figure 5 * | 1-15 | |
| A | US 2018/341127 A1 (FRANK IAN WARD [US] ET AL) 29 November 2018 (2018-11-29) * figure 1A * | 1-15 | TECHNICAL FIELDS SEARCHED (IPC) G02F |
| A | JP H11 174271 A (MINOLTA CO LTD) 2 July 1999 (1999-07-02) * abstract; figures 1,2,16,17 * | 1-15 | |

The present search report has been drawn up for all claims

| Place of search | Date of completion of the search | Examiner |
|---|---|---|
| The Hague | 28 September 2023 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 3025

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2023

| Patent document cited in search report | | Publication date | Patent family member(s) | | Publication date |
|---|---|---|---|---|---|
| WO 2022265722 | A1 | 22-12-2022 | NONE | | |
| US 2018074457 | A1 | 15-03-2018 | US 2018074457 A1 | | 15-03-2018 |
| | | | US 2021080906 A1 | | 18-03-2021 |
| US 2018341127 | A1 | 29-11-2018 | US 2018341127 A1 | | 29-11-2018 |
| | | | WO 2018218106 A1 | | 29-11-2018 |
| JP H11174271 | A | 02-07-1999 | NONE | | |

EPO FORM P0459

For more details about this annex : see Official Journal of the European Patent Office, No. 12/82